(19) Europäisches Patentamt
European Patent Office
Office européen des brevets

(11) Veröffentlichungsnummer: **0 297 363**
**A2**

(12) # EUROPÄISCHE PATENTANMELDUNG

(21) Anmeldenummer: **88109631.7**

(22) Anmeldetag: **16.06.88**

(51) Int. Cl.4: **C08L 81/06 , C08K 7/00 , C08L 71/04**

(30) Priorität: **27.06.87 DE 3721337**
**30.09.87 DE 3732931**

(43) Veröffentlichungstag der Anmeldung:
**04.01.89 Patentblatt 89/01**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Ittemann, Peter, Dr.**
**Wilhelm-Busch-Strasse 87**
**D-6700 Ludwigshafen(DE)**
Erfinder: **Simon, Georg Nikolaus, Dr.**
**Untere Hart 10**
**D-6703 Limburgerhof(DE)**
Erfinder: **Heinz, Gerhard, Dr.**
**Im Vogelsang 2**
**D-6719 Weisenheim(DE)**
Erfinder: **Zeiner, Hartmut, Dr.**
**Johann-Strauss-Strasse 13**
**D-6831 Plankstadt(DE)**
Erfinder: **Buchert, Hermann, Dr.**
**An der Nolzeruhe 8c**
**D-6702 Bad Duerkheim(DE)**
Erfinder: **Seibring, Joachim, Dr.**
**Wiesenweg 5**
**D-6715 Lambsheim(DE)**

(54) **Hochtemperaturbeständige thermoplastische formmassen mit verbesserter Schmelzestabilität.**

(57) Hochtemperaturbeständige thermoplastische Formmassen auf der Basis von Polyarylethersulfonen und gegebenenfalls Polyetherketonen mit einem Gehalt an Alkalimetallsalzen von maximal 100 ppm, bezogen auf Gesamtpolymer.

EP 0 297 363 A2

**Hochtemperaturbeständige thermoplastiche Formmassen mit verbesserter Schmelzestabilität**

Die Erfindung betrifft hochtemperaturbeständige thermoplastische Formmassen, enthaltend als wesentliche Komponente

A) 20 bis 100 Gew.% eines Polyarylethersulfons aufgebaut aus

$A_1$) 0 bis 100 mol-% Einheiten der allgemeinen Formel I

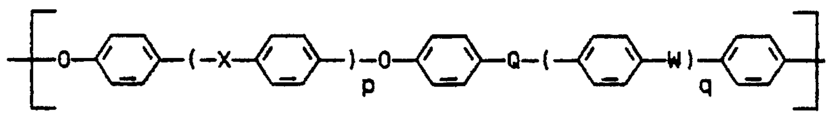

(I)

und/oder

$A_2$) 0 bis 100 mol-% Einheiten der allgemeinen Formel

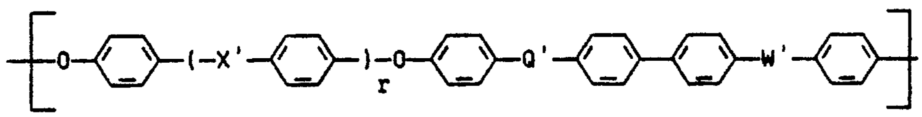

(II)

oder deren kernsubstituierten $C_1$-$C_6$-Alkyl- oder Alkoxy, Aryl-, Chlor- oder Fluorderivaten, wobei X, X′, Q, Q′ W und W′ unabhängig voneinander -$SO_2$-, -O-, -CO- eine chem. Bindung oder -CRR′- sein können und jeweils mindestens einer der Substituenten X, Q, W und X′, Q′und W′ -$SO_2$- ist, R und R′ jeweils Wasserstoffatome, $C_1$-$C_6$-Alkyl- oder Alkoxygruppen, Arylgruppen oder deren Fluor- oder Chlorderivate darstellen, und p, q und r jeweils den Wert 0 oder 1 haben, sowie darüber hinaus

B) 0 - 80 Gew.% eines Polyaryletherketons, aufgebaut aus

$B_1$) 0 bis 100 mol-% Einheiten der allgemeinen Formel III

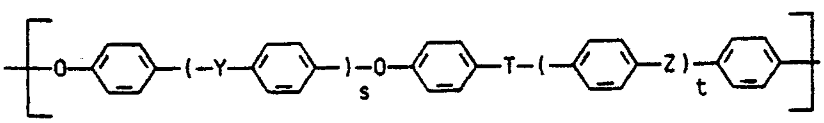

(III)

und/oder

$B_2$) 0 bis 100 mol-% Einheiten der allgemeinen Formel

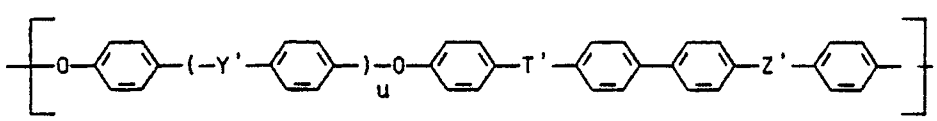

(IV)

oder deren kernsubstituierten $C_1$-$C_6$-Alkyl-, $C_1$-$C_6$-Alkoxy-, Phenyl-, Chlor- oder Fluorderivaten, wobei Y, Y′, T, T′, Z und Z′ jeweils -CO-, CR″R‴, eine chem. Bindung oder -O- sein können und mindestens einer der Substituenten Y, T und Z bzw. Y′, T′ und Z′ -CO- ist, R″ und R‴ die gleiche Bedeutung wie R und R′ haben können, und s, t und u jeweils den Wert 0 oder 1 haben, und

C) 0 - 90 Gew.% faser- oder teilchenförmigen Füllstoffen oder deren Mischungen.

Polyarylethersulfone haben aufgrund ihrer guten physikalischen und thermischen Eigenschaften in den letzten Jahren steigendes Interesse für viele verschiedene Verwendungszwecke gefunden. Aufgrund Ihrer hohen Schmelzpunkte sind bei der thermoplastischen Verarbeitung der Polyarylethersulfone Temperaturen von 370 °C und mehr erforderlich.

Bei derart hohen Temperaturen ist bei den nicht stabilisierten Polymeren eine Tendenz zur Zersetzung

zu erkennen, die sich in einer erheblichen Steigerung der Schmelzviskosität oder in einer Dunkelfärbung zeigt, wenn nicht bestimmte Maßnahmen zur Stabilisierung des Polymeren getroffen werden.

In der DE-OS 22 11 807 werden Polyarylethersulfonen 0,01 - 4 Gew.% einer Phosphorverbindung zur thermischen Stabilisierung zugesetzt. Ausweislich der Beispiele wird dadurch eine Verringerung der Schmelzviskositätszunahme um etwa den Faktor 2 erreicht. Dies ist jedoch für manche Anwendungszwecke immer noch nicht ausreichend.

Auch in der DE-OS 22 21 969 werden thermisch stabilisierte Polyarylethersulfone beschrieben, die neben 2 - 40 Gew.% Asbest oder Titandioxid noch 0,2 - 15 Gew.% eines zweiwertigen Metalloxids oder -sulfids enthalten, das sich mit Wasser nicht zu einem entsprechenden Hydroxid umsetzt.

Die Zugabe von derartig großen Mengen an Füllstoffen und Metallverbindungen zu Polyarylethersulfonen hat jedoch äußerst nachteilige Auswirkungen auf die Transparenz daraus hergestellter Formmassen. Dies ist für viele Anwendungszwecke nicht akzeptabel.

Aufgrund ihrer guten Wärmestandfestigkeit haben Polyarylethersulfone auch Verwendung im medizinischen Bereich gefunden. In diesem Bereich ist es erforderlich, daß sich die daraus hergestellten Gegenstände wiederholt bei z.B. 140° im Wasserbad (unter Druck) sterilisieren lassen, ohne daß die Transparenz oder die mechanischen Eigenschaften darunter leiden. Dieses Kriterium wird von handelsüblichen Polyarylethersulfonen, die nicht stabilisiert sind, nicht erfüllt (vgl. N. Krollmann, Fachtagung Hochtemperaturbeständige Kunststoffe v. 12. und 13.12.1985, Tagunsbericht S. 67).

Ein weiteres Anwendungsgebiet von Polyarylethersulfonen ist der Einsatz in Form von Rohren zur Leitung von Dampf (Fernwärmenetz) oder anderen heißen Medien. Deswegen ist der Erhalt der mechanischen Eigenschaften auch unter Bedingungen hohen Innendrucks bei erhöhten Temperaturen wünschenswert.

Der vorliegenden Erfindung lag daher die Aufgabe zugrunde, hochtemperaturbeständige thermoplastische Formmassen zur Verfügung zu stellen, die neben Polyarylethersulfonen als wesentliche Komponente noch Polyaryletherketone und Füllstoffe enthalten können und die sich durch eine gute Stabilität der Schmelzeviskosität bei Temperaturen von 400° C und mehr sowie durch eine gute Stabilität bei längerer Beanspruchung bei erhöhten Temperaturen und erhöhtem Druck (sowohl Innen- als auch Außendruck) auszeichnen.

Erfindungsgemäß wird diese Aufgabe durch die eingangs definierten hochtemperaturbeständigen thermoplastischen Formmassen gelöst, die einen Gehalt an Alkalimetallsalzen von maximal 100 ppm, bezogen auf Gesamtpolymer und berechnet als Alkalimetall, aufweisen.

Die erfindungsgemäßen Formmassen sind bei Temperaturen von 400° C über längere Zeiträume stabil und zeigen keine signifikante Erhöhung der Schmelzviskosität. Darüber hinaus lassen sie sich auch bei erhöhten Temperaturen, gegebenenfalls unter Druck, längere Zeit lagern, ohne daß die Gebrauchseigenschaften, insbesondere die Transparenz und die mechanischen Eigenschaften signifikant beeinträchtigt werden.

Als Komponente A enthalten die erfindungsgemäßen hochtemperaturbeständigen thermoplastischen Formmassen 20 bis 100, vorzugsweise 60 bis 100 und insbesondere 70 bis 95 mol-%, bezogen auf die Summe A + B, eines oder mehrerer Polyarylethersulfone mit wiederkehrenden Einheiten der allgemeinen Formeln I und/oder II.

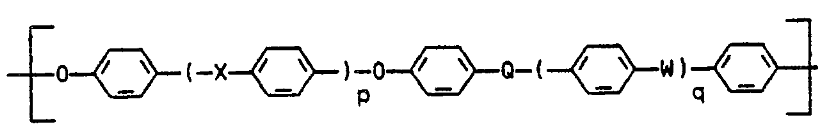

(I)

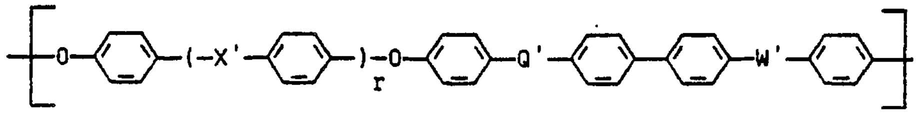

(II)

oder deren kernsubstituierten $C_1$-$C_6$- oder Alkoxy-, Aryl-, Chlor- oder Fluorderivaten.

Die Substituenten X, X′, Q, Q′, W und W′ können jeweils $-SO_2-$, -CO-, -O-, eine chem. Bindung oder GRR′ sein; in jedem Falle ist jeweils mindestens einer der Substituenten X, Q oder W eine $-SO_2$-Gruppe.

Entsprechendes gilt für die Substituenten X′, Q′ und W′, d.h. auch von diesen ist mindestens einer eine $SO_2$-Gruppe.

R und R′ im Substituenten -CRR′- stellen Wasserstoffatome, $C_1$-$C_6$-Alkyl- oder $C_1$-$C_6$-Alkoxygruppen, Arylgruppen oder deren Chlor- oder Fluorderivate bzw. Chlor oder Fluor selbst dar. Beispiele sind Methyl-, Ethyl-, i- und n-Propyl, entsprechende Alkoxygruppen und $CF_3$. Bevorzugte Substituenten sind Wasserstoff, Methyl, Phenyl und Trifluormethyl.

Die Parameter p, q und r können jeweils den Wert 0 oder 1 haben.

In Polyarylethersulfonen, die sowohl Einheiten der Formel I als auch der Formel II aufweisen, können die Einheiten der Formeln I und II statistisch oder in Blockform vorliegen.

Das Molekulargewicht $\overline{M}_n$ (Zahlenmittelwert) der Polyarylethersulfone A liegt im allgemeinen im Bereich von 2000 bis 200000, vorzugsweise von 5000 bis 100000 und insbesondere von 6000 bis 70000.

Der Anteil der Einheiten I und/oder II unterliegt keiner Beschränkung, d/h/ er kann jeweils von 0 bis 100 Mol.% betragen. In letzterem Fall bauen sich die Polyarylethersulfone A aus nur einer wiederkehrenden Einheit auf. Bevorzugt sind die Polyarylethersulfone A aus 5 bis 95, insbesondere 15 bis 85 mol-% Einheiten der Formel I und 5 bis 95, insbesondere 15 bis 85 mol-% Einheiten der Formel II aufgebaut. Beispiele für Einheiten der allgemeinen Formel I und II sind:

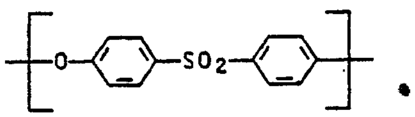

(I1)

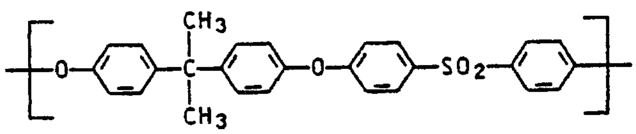

(I2)

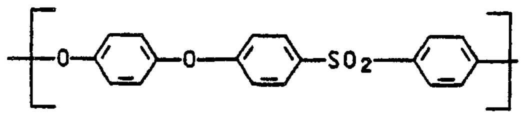

(I3)

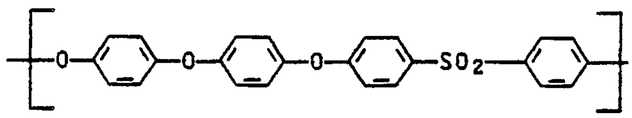

(I4)

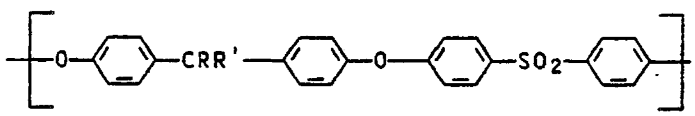

(I5)

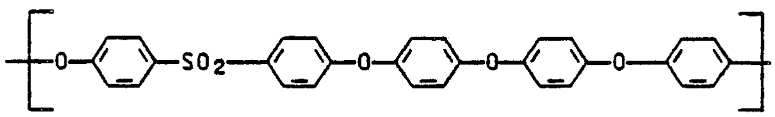

(I6)

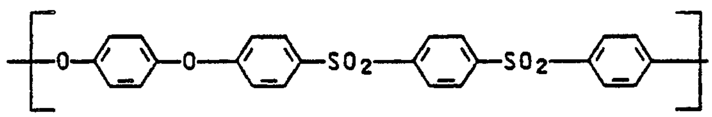

(I7)

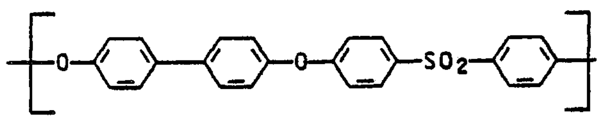

(I8)

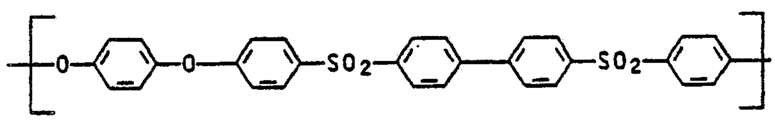

(II1)

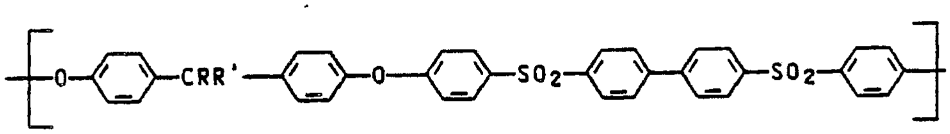

(II2)

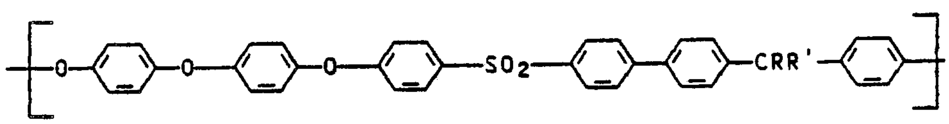

(II3)

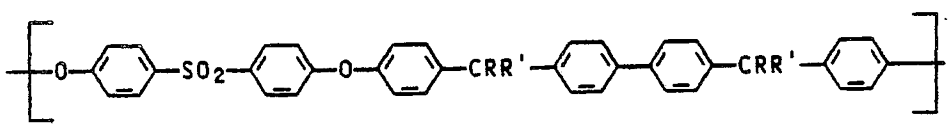

(II4)

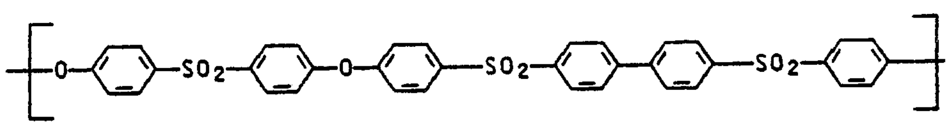

(II5)

wobei diese Auswahl nur stellvertretend für die unter die allgemeinen Formeln I und II fallenden Einheiten steht. Über die Substituenten X, Q, W bzw. X′, Q′ und W′ und die Parameter p, q und r lassen sich die vorstehenden Beispiele wie folgt beschreiben:

| | p | q | X | Q | W |
|---|---|---|---|---|---|
| I1 | 1 | 0 | $-SO_2-$ | $SO_2$ | - |
| I2 | 1 | 0 | $-C(CH_3)_2-$ | $-SO_2-$ | - |
| I3 | 0 | 0 | - | $-SO_2-$ | - |
| I4 | 1 | 0 | -O- | $-SO_2-$ | - |
| I5 | 1 | 0 | -CRR'- | $-SO_2-$ | - |
| I6 | 1 | 1 | $-SO_2-$ | -O- | -O- |
| I7 | 0 | 1 | - | $-SO_2-$ | $-SO_2-$ |
| I8 | 1 | 0 | chem. Bdg. | $-SO_2-$ | - |

| | r | X' | Q' | W' |
|---|---|---|---|---|
| II1 | 0 | - | $-SO_2-$ | $-SO_2-$ |
| II2 | 1 | -CRR'- | $-SO_2-$ | $-SO_2-$ |
| II3 | 1 | -O- | $-SO_2-$ | -CRR'- |
| II4 | 1 | $-SO_2-$ | -CRR'- | -CRR'- |
| II5 | 1 | $-SO_2-$ | $-SO_2-$ | $-SO_2-$ |

Obwohl, wie bereits erwähnt, grundsätzlich beliebige Kombinationen der Substituenten X, Q und W bzw. X', Q' und W' möglich sind, werden im allgemeinen solche Einheiten bevorzugt, in denen Q und W bzw. Q' und W' gleich sind, da die entsprechenden Monomeren in der Regel leichter zugänglich sind.

Besonders bevorzugt als Komponente A sind Polyarylethersulfone, die 50 bis 100 mol-% an wiederkehrenden Einheiten der Formel I1, I2 und II5 aufweisen.

Die Komponente A kann auch mehrere verschiedene Einheiten der allgemeinen Formel I bzw. verschiedene Einheiten der allgemeinen Formel II enthalten, d.h. sie kann ein Copolymer mit statistischem oder blockweisem Aufbau aus verschiedenen Einheiten der allgemeinen Formel I oder der allgemeinen Formel II sein.

Die als Komponente B in den erfindungsgemäßen thermoplastischen Formmassen gegebenenfalls enthaltenen Polyaryletherketone der allgemeinen Formeln III und/oder IV machen 0 bis 80, vorzugsweise 0 bis 40 und insbesondere 5 bis 30 Gew.%, bezogen auf die Summe der Komponenten A und B, aus.

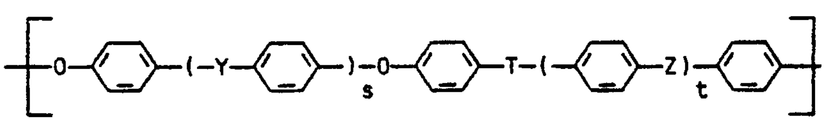

(III)

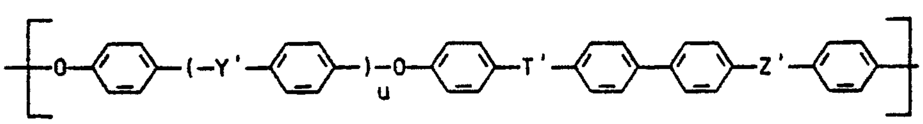

(IV)

Wie bei der Komponente A können die Einheiten der Formel III und/oder IV auch mit $C_1$-$C_6$-Alkyl-, $C_1$-$C_6$-Alkoxy-, Phenyl- deren Chlor- oder Fluorderivaten oder Chlor- oder Fluor am aromatischen Kern substituiert sein.

Die Substituenten Y, Y', T, T', Z und Z' können jeweils -CO-, $CR''R'''$-, eine chem. Bindung oder -O- sein, mit der Maßgabe, daß mindestens einer der Substituenten Y, T, Z bzw. Y', T' und Z' eine -CO-Gruppe ist.

s, t und n haben jeweils den Wert 0 oder 1.

Die Polyetherketone B können nur aus Einheiten je einer der Formeln III und IV oder aus Einheiten der beiden Formeln aufgebaut sein; in letzterem Fall können die Einheiten $B_1$ und $B_2$ entweder statistisch oder in Form von Blöcken angeordnet sein. Der Anteil der Einheiten $B_1$ und $B_2$ an den Polyetherketonen B unterliegt keiner Beschränkung und kann jeweils von 0 bis 100 mol-% betragen. Bevorzugt werden Polyetherketone aus 5 bis 95, insbesondere 15 bis 85 mol-% und entsprechend 5 bis 95, insbesondere 15

bis 85 mol-% $B_2$.

Das Molekulargewicht (Zahlenmittelwert) der Polyetherketone B liegt im allgemeinen im Bereich von 2000 bis 150000, vorzugsweise 4000 bis 70000.

Beispiele für Einheiten der Formeln III und IV sind solche, in denen in den oben angegebenen Beispielen für die Einheiten I und II die $-SO_2$-Gruppen jeweils durch -CO- ersetzt sind.

Diese Einheiten lassen sich mit den Parametern T, $T'$, Y, $Y'$, Z, $Z'$, s, t und n analog wie die Beispiele der Einheiten I und II beschrieben, indem $-SO_2-$ jeweils durch -CO- ersetzt wird.

Als Beispiele für Dihydroxy- und Dihalogenverbindungen, die zur Herstellung der Polyarylethersulfone bzw. Polyetherketone in den erfindungsgemäßen Formmassen eingesetzt werden können, seien stellvertretend genannt: Dihydroxyverbindungen

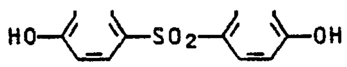

4,4'-Dihydroxydiphenylsulfon

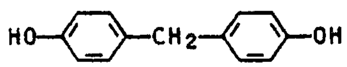

Di-(4-hydroxyphenyl)methan

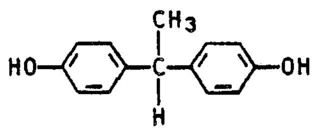

2,2-Di(4-hydroxyphenyl)ethan

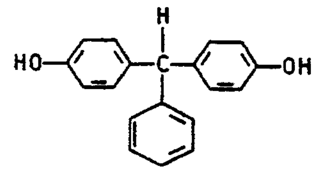

1-Phenyl-1,1-di-(4-hydroxyphenyl)-methan

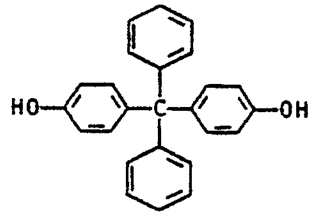

Diphenyl-di-(4-hydroxyphenyl)methan

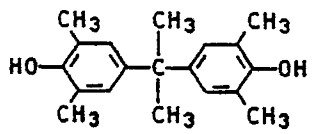

Tetramethylbisphenol A

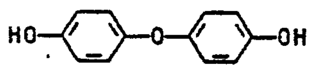

4,4'-Dihydroxydiphenylether

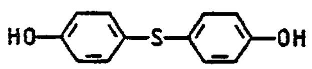

4,4'-Dihydroxydiphenylsulfid

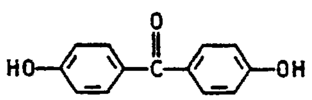

4,4'-Dihydroxybenzophenon

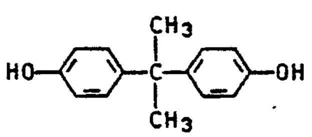

Bisphenol A

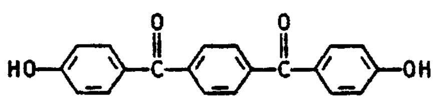

1,4-Di(4-hydroxybenzoyl)benzol

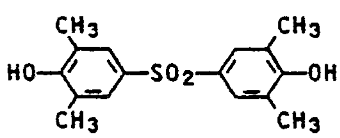

3,3',5,5'-Tetramethyl-4,4'-dihydroxy-diphenylsulfon

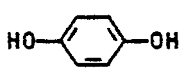

Hydrochinon

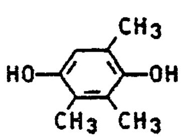

2,3,6-Trimethylhydrochinon

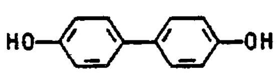

4,4'-Dihydroxydiphenyl

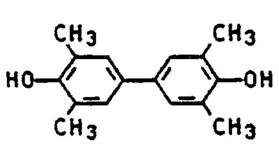

3,3',5,5'-Tetramethyl-4,4'-dihydroxy-diphenyl

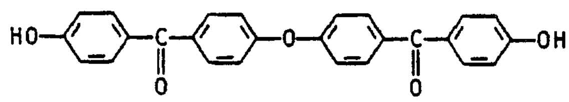 Dihydroxybenzophenonether

Von den vorstehend aufgeführten Dihydroxyverbindungen werden 4,4'-Dihydroxydiphenyl, 3,3',5,5'-Tetramethyl-4,4'-dihydroxydiphenyl, Bisphenol A, Tetramethyl-Bisphenol A, 4,4'-Dihydroxydiphenylsulfon und 2,3,6-Trimethylhydrochinon besonders bevorzugt.

Dihalogenverbindungen

Bezeichnung der Chlorverbindung

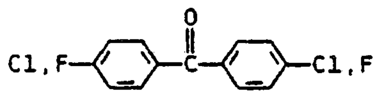 4,4'-Dichlorbenzophenon

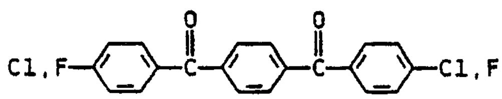 1,4-Di(4-chlorbenzoyl)benzol

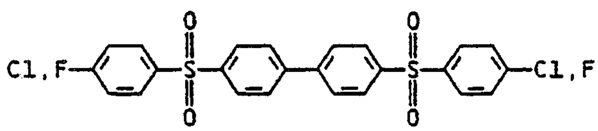 4,4'-Di-(4-chlorphenylsulfonyl)-diphenyl

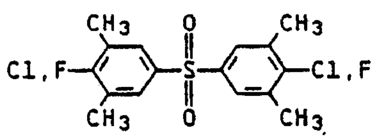 3,3',5,5'-Tetramethyl-4,4'-dichlordiphenylsulfon

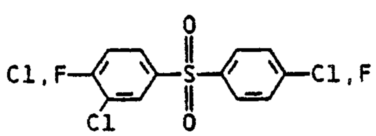 3'-Chlor-4,4'-Dichlordiphenylsulfon

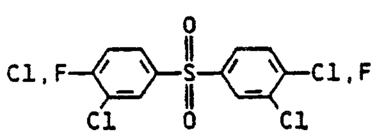 3,3',4,4'-Tetrachlordiphenylsulfon

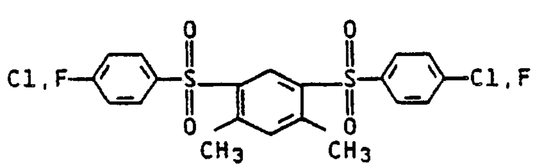 1,5-Dimethyl-2,4-di(4'-chlorphenylsulfonyl)benzol

Von den vorstehend aufgeführten Dihalogenverbindungen werden 3,3',5,5'-Tetramethyl-4,4'-dichlordiphenylsulfon, 4,4-Di(4-chlorphenylsulfonyldiphenyl und 1,5-Dimethyl-2,4-di-(4'-chlorphenylsulfon)benzol besonders bevorzugt bzw. die entsprechenden Verbindungen, in denen die -$SO_2$-Gruppe durch die -CO-Gruppe ersetzt ist.

Als Monomere mit Biphenyleinheiten, die zur Herstellung von Polymeren mit wiederkehrenden Einheiten der Formel II und IV eingesetzt werden, seien nur stellvertretend genannt:

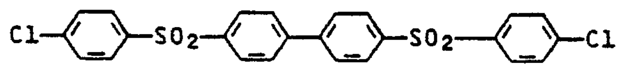

4,4'-Di(4-chlorphenyl-sulfonyl)biphenyl

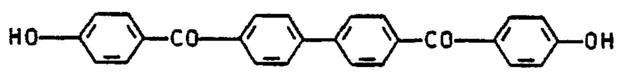

4,4'-Di(4-hydroxy-benzoyl)-biphenyl

sowie grundsätzlich Verbindungen analoger Struktur in denen die $-SO_2-$ oder -CO-Gruppen durch andere Grupen (O-, CRR'-) ersetzt sind.

Die vorstehend genannten Verbindungen können, solange die Voraussetzungen des Anspruchs 1 erfüllt sind, prinzipiell in beliebiger Kombination miteinander umgesetzt werden.

Als Komponente C können die erfindungsgemäßen Formmassen 0 - 90, vorzugsweise 2 - 45 und insbesondere 5 - 40 Gew.% faser- oder teilchenförmige Füllstoffe oder deren Mischungen enthalten.

Als verstärkend wirkende Füllstoffe seien beispielsweise Asbest, Kohle und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Glasen mit einem Durchmesser von 5 bis 20 µm, vorzugsweise 8 bis 15 µm, zur Anwendung gelangen, die nach ihrer Einarbeitung eine mittlere Länge von 0,05 bis 1 mm, vorzugsweise 0,1 bis 0,5 mm, aufweisen. Die mit Glasseidenrovings oder geschnittener Glasseide verstärkten Formmassen enthalten zwischen 10 und 60 Gew.-%, vorzugsweise 20 bis 50 Gew.-%, des Verstärkungsmittels, bezogen auf das Gesamtgewicht, während die imprägnierten Glasgewebe, -matten und/oder -vliese zwischen 10 und 80 Gew.-%, vorzugsweise zwischen 30 und 60 Gew.-%, der hochtemperaturbeständigen thermoplastischen Formmassen, bezogen auf das Gesamtgewicht, enthalten.

Auch Wollastonit, Calciumcarbonat, Glaskugeln, Quarzmehl und Bornitrid oder Mischungen dieser Füllstoffe sind verwendbar.

Darüber hinaus können auch Pigmente, Zusatz-und Hilfsstoffe, üblicherweise in Mengen von 0,01 bis 3 Gew.-%, bezogen auf das Gewicht an Polyarylethersulfonen und/oder Polyaryletherketonen, eingesetzt werden.

Als Pigmente eignen sich beispielsweise Titandioxid, Cadmium-, Zinksulfid, Bariumsulfat und Ruß. Als andere Zusatz- und Hilfsstoffe kommen beispielsweise in Betracht Farbstoffe, Schmiermittel, wie z.B. Graphit oder Molybdändisulfid, Schleifmittel, wie z.B. Carborund, Lichtstabilisatoren und Hydrolyseschutzmittel.

Die Copolykondensate können darüber mit anderen Thermoplasten, beispielsweise Polyestern, Polyamiden, Polyurethanen, Polyolefinen, Polyvinylchlorid und Polyoxymethylenen in Mengen von 5 bis 60 Gew.%, vorzugsweise von 20 bis 50 Gew.%, bezogen auf die Formmassen, gemischt werden.

Die erfindungsgemäßen Formmassen können nach an sich bekannten Verfahren zur Herstellung von Polyarylethersulfonen oder Polyetherketonen hergestellt werden, wie sie in der Literatur beschrieben sind.

Die Verfahrensbedingungen wie Temperatur, Druck, geeignete Lösungsmittel und evtl. Zusätze (Katalysatoren) sind die gleichen, wie sie für in der EP-A 113 112 und der EP-A 135 130 beschrieben sind, so daß sich hier nähere Angaben erübrigen.

Besonders geeignet ist die Umsetzung in aprotischen polaren Lösungsmitteln in Gegenwart von wasserfreien Alkalicarbonaten als Katalysatoren. Eine besonders bevorzugte Kombination ist N-Methylpyrrolidon als Lösungsmittel und $K_2CO_3$ als Base. Bei der Herstellung der Polyetherketone wird in der Regel wegen der erforderlichen höheren Reaktionstemperaturen Diphenylsulfon als Lösungsmittel eingesetzt.

Die Menge an Lösungsmittel beträgt im allgemeinen 5 bis 100 Mol, vorzugsweise 5 bis 20 Mol, bezogen auf ein Mol Monomere. Dies ergibt einen bevorzugten Feststoffgehalt der Reaktionslösung im Bereich von 5 bis 50 Gew.%, besonders bevorzugt 10 bis 40 Gew.%.

Das bei der Polykondensation entstehende Wasser kann mit Hilfe eines Azeotropbildners, Anlegen eines Unterdrucks oder vorzugsweise durch Einleiten eines Stickstoffstroms und Abdestillation entfernt werden.

Als Azeotropbildner eignen sich alle Verbindungen, die bei Normaldruck im Bereich der Reaktionstemperatur sieden und die sich mit dem Reaktionsgemisch homogen mischen lassen, ohne chemische Reaktionen einzugehen.

Die Reaktionstemperatur bei der Herstellung der Polyarylethersulfone liegt im allgemeinen im Bereich von 130 bis 220°C, vorzugsweise 150 bis 210°C; die Gesamt-Reaktionsdauer richtet sich nach dem gewünschten Kondensationsgrad, liegt aber im allgemeinen im Bereich von 0,1 bis 15 Stunden.

Bei der Herstellung der Polyetherketone B sind im allgemeinen höhere Temperaturen im Bereich von 150 - 400°C, insbesondere 200 - 350°C erforderlich.

Im Anschluß an die Polykondensation können zur Stabilisierung freie Phenolat-Endgruppen mit einem Aryl- oder Alkylierungsmittel, wie z.B. Methylchlorid, umgesetzt werden. Dies erfolgt vorzugsweise bei Temperaturen von 50-200 °C, vorzugsweise 50-150 °C.

Bedingt durch die bei der Kondensation als Base eingesetzten Alkalimetallcarbonate, die im Verlauf der Reaktion in Alkalimetallhalogenide überführt werden, weisen die Polyarylethersulfone bzw. Polyetherketone Gehalte an Alkalimetallsalzen auf, die weit über 100 ppm liegen und daher nicht zur Herstellung der erfindungsgemäßen Formmassen geeignet sind.

Zur Abtrennung des, im allgemeinen in der Reaktionslösung suspendierten Alkalimetallhalogenids, können an sich geeignete Trenneinrichtungen, beispielsweise Klärfilter oder Zentrifugen benutzt werden.

Andererseits ist es auch möglich, die erhaltenen Produkte mehrmals mit Wasser oder mit Mischungen aus organischen Lösungsmitteln zu behandeln, die eine Extraktion des Alkalimetallhalogenids ermöglichen. Eine geeignete derartige Mischung ist beispielsweise eine Methanol-/Aceton-Mischung.

Wesentlich ist es in jedem Fall, daß die Filtration oder Zentrifugation bzw. die Extraktion solange durchgeführt werden, bis ein Gehalt an Alkalimetall in den erfindungsgemäßen Formmassen, bezogen auf Gesamtpolymer, von maximal 100 ppm, vorzugsweise weniger als 80 ppm und insbesondere weniger als 60 ppm erreicht ist.

Als besonders vorteilhaft hat es sich erwiesen, den Gehalt an Alkalimetall möglichst weit zu senken, d.h. je niedriger der Salzgehalt, desto vorteilhafter sind in der Regel die Eigenschaften. Gehalte von maximal 10, insbesondere maximal 8 ppm sind daher erstrebenswert.

Die Bestimmung des Gehalts an Alkalimetallen kann durch an sich bekannte und in der Literatur beschriebene Verfahren erfolgen.

Die weitere Aufarbeitung der weitgehend alkalimetallfreien Polyarylethersulfone bzw. Polyaryletherketone kann auf an sich bekannte Weise erfolgen, z.B. durch Verdampfen des Lösungsmittels oder Ausfüllung des Polymeren in einem geeigneten Nichtlösungsmittel. Derartige Verfahren sind dem Fachmann bekannt.

Die erfindungsgemäßen thermoplastischen Formmassen zeichnen sich durch ihre gute Wärmeformbeständigkeit, insbesondere ihre gute Schmelzestabilität auch bei Temperaturen von 400 °C aus. Darüber hinaus können die Formmassen mehrmals einer Heißdampfsterilisation bei erhöhten Temperaturen unter Druck unterzogen werden, ohne daß dadurch die mechanischen Eigenschaften und - falls von vornherein gegeben - die Transparenz der Formmassen beeinträchtigt wird. Auch einer längeren Lagerung bei erhöhten Temperaturen unter Innendruck in Wasser widerstehen die erfindungsgemäßen Formmassen ohne wesentliche Verschlechterung der mechanischen Eigenschaften.

Aufgrund dieses Eigenschaftsspektrums sind die erfindungsgemäßen thermoplastischen Formmassen insbesondere zur Herstellung von thermisch hochbeanspruchten Formkörpern, für die Anwendung im medizinischen Sektor, bei der Lebensmittelverpackung sowie auch zum Einsatz in Verbundwerkstoffen geeignet.

Beispiel 1

Herstellung von Polyethersulfon mit wiederkehrenden Einheiten der allgemeinen Formel I1 mit einem Gehalt an Kalium von weniger als 10 ppm.

In einem 50 l Kessel wurden 7753 g (27 mol) 4,4′-Dichlor-diphenylsulfon, 6757 g (27 mol) 4,4′-Dihydroxy-diphenylsulfon und 4104 g (29.7 mol) Kaliumkarbonat in 30 l N-Methylpyrrolidon unter Einheiten eines starken Stickstoffstroms auf 190 °C erhitzt. Nach 8 h Reaktionszeit wurde über einen Druckfilter von unumgesetzten Kaliumkarbonat und gebildetem Kaliumchlorid abfiltriert und das Filtrat in Wasser gefällt. Nach Extraktion des Polymeren mit Wasser auf einen Rest-Kaliumgehalt im Polymeren von < 10 ppm wurde das Polymer-Pulver abgepresst, getrocknet und auf einem Extruder bei 300 °C zu Granulat extrudiert. Die Lösungsviskosität des Granulats betrug 68 ml/g (gemessen 0.5 %ig in Phenol/o-Dichlorbenzol 1:1 bei 25 °C). Aus diesem Granulat wurden Norm-Kleinstäbe nach DIN 53451 der Größe 50 x 6 x 4 mm gespritzt (Massetemperatur: 350 °C, Werkzeugtemperatur 150 °C).

Wasserlagerung

Die oben hergestellten Normkleinstäbe werden einer Wasserlagerung in einem Druckkessel bei 140° C unter Druck unterzogen. Nach 10 Tagen (= 240 Stunden) bzw. 20 Tagen (= 480 Stunden) wurden die Normkleinstäbe herausgeholt und in einem Gefäß mit Wasser zwischengelagert, bis sie die Temperatur des Prüfraums mit Normklima 23/50-2 (DIN 50014) angenommen hatten. Anschließend wurden die Proben mit saugfähigem Papier abgetrocknet und unmittelbar die Messungen durchgeführt.

Zum Vergleich wurde Victrex® 3600 G (Polyarylethersulfon mit wiederkehrenden Einheiten der Formel I1 der Fa. ICI) den gleichen Untersuchungen unterworfen.

Die Untersuchung der mechanischen Eigenschaften wurde nach folgenden Normen durchgeführt:

Streckspannung : DIN 53455

Dehnung bei Streckspannung: DIN 5345

Zugefestigkeit : DIN 53455

Dehnung bei Zugfestigkeit : DIN 53455

Reißfestigkeit : DIN 53455

Reißdehnung : DIN 53455

Schlagzähigkeit : DIN 53453

Die Ergebnisse der Messungen sin der nachfolgenden Tabelle zu entnehmen.

Tabelle:

| Prüfung | DIN | Einheit | Vergleich | | | Beispiel 1 | | |
|---|---|---|---|---|---|---|---|---|
| Kalium-Gehalt | | ppm | 150 | | | 3 | | |
| Lagerzeit in Wasser bei 140 °C | | Tage | 0 | 10 | 20 | 0 | 10 | 20 |
| Streckspannung | 53455 | N/mm² | 88.49 | 97.56 | -- | 86.2 | 100.16 | 78.8 |
| Dehnung bei Streckspannung | 53455 | % | 6.7 | 6.0 | -- | 6.7 | 5.9 | 4.0 |
| Zugfestigkeit | 53455 | N/mm² | 88.5 | 86.2 | 14.83 | 86.3 | 97.11 | 78.5 |
| Dehnung bei Fmax | 53455 | % | 6.6 | 4.7 | 0.83 | 6.8 | 5.9 | 3.9 |
| Reißfestigkeit | 53455 | N/mm² | 53.77 | 81.4 | 14.82 | 61.0 | 87.6 | 64.7 |
| Reißdehnung | 53455 | % | 15.0 | 4.8 | 0.83 | 30.3 | 6.2 | 4.7 |
| Schlagzähigkeit (23 °C) | 53453 | kJ/m² | ohne Bruch | 73.8 | 24.1 | ohne Bruch | 108.1 | 113.5 |

Die Ergebnisse zeigen deutlich, daß die mechanischen Eigenschaften der erfindungsgemäßen Polyarylethersulfone durch die Wasserlagerung bei 140 °C wesentlich weniger beeinträchtigt werden als die des Vergleichsprodukts. Hinzu kommt, daß das erfindungsgemäße Polyarylethersulfon auch nach 20-tägiger Wasserlagerung noch transparent war, während das Vergleichsprodukt starke milchige Eintrübungen aufwies.

## Ansprüche

1. Hochtemperaturbeständige thermoplastischen Formmassen, enthaltend als wesentliche Komponenten

A) 20 bis 100 Gew.% eines Polyarylethersulfons aufgebaut aus

$A_1$) 0 bis 100 mol-% Einheiten der allgemeinen Formel I

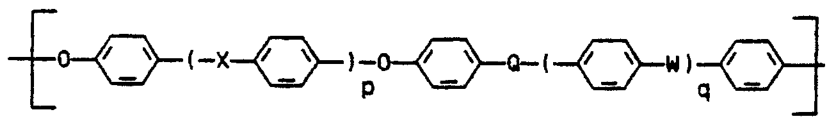

(I)

und/oder

$A_2$) 0 bis 100 mol-% Einheiten der allgemeinen Formel II

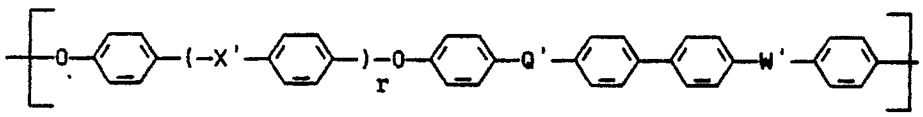

(II)

oder deren kernsubstituierten $C_1$-$C_6$-Alkyl- oder Alkoxy, Aryl-, Chlor- oder Fluorderivaten, wobei X, X′, Q, Q′ W und W′ unabhängig voneinander

-$SO_2$-, -O-, -CO- eine chem. Bindung oder -CRR′- sein können und jeweils mindestens einer der Substituenten X, Q, W und X′, Q′ und W′ -$SO_2$- ist,

R und R′ jeweils Wasserstoffatome, $C_1$-$C_6$-Alkyl- oder Alkoxygruppen, Arylgruppen oder deren Fluor- oder Chlorderivate darstellen, und

p, q und r jeweils den Wert 0 oder 1 haben,

sowie darüber hinaus

B) 0 - 80 Gew.% eines Polyaryletherketons, aufgebaut aus

$B_1$) 0 bis 100 mol-% Einheiten der allgemeinen Formel III

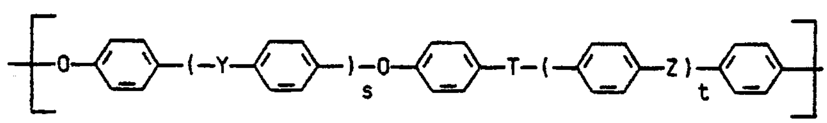

(III)

und/oder

$B_2$) 0 bis 100 mol-% Einheiten der allgemeinen Formel

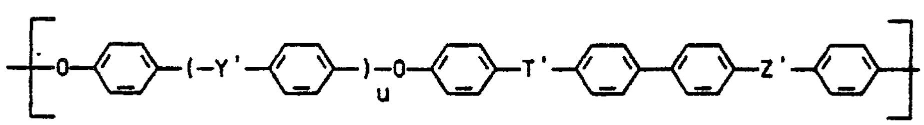

(IV)

oder deren kernsubstituierten $C_1$-$C_6$-Alkyl-, $C_1$-$C_6$-Alkoxy-, Phenyl-, Chlor- oder Fluorderivaten, wobei

Y, Y′, T, T′, Z und Z′ jeweils -CO-, CR″R‴, eine chem. Bindung oder -O- sein können und mindestens einer der Substituenten Y, T und Z bzw. Y′, T′ und Z′ -CO- ist R″ und R‴ die gleiche Bedeutung wie R und R′

haben können,
und s, t und u jeweils den Wert 0 oder 1 haben, und
C) 0 - 90 Gew.% faser- oder teilchenförmigen Füllstoffen oder deren Mischungen,
gekennzeichnet durch einen Gehalt an Alkalimetallsalzen von maximal 100 ppm, bezogen auf Gesamtpolymer (berechnet als Alkalimetall)

2. Hochtemperaturbeständige thermoplastische Formmassen nach Anspruch 1, dadurch gekennzeichnet, daß der Gehalt an Alkalimetallsalzen maximal 10 ppm, bezogen auf Gesamtpolymer und berechnet als Alkalimetall, beträgt.

3. Hochtemperaturbeständige thermoplastische Formmassen nach Anspruch 1 oder 2, dadurch gekennzeichnet, daß die Komponente A 50 - 100 mol-% an wiederkehrenden Einheiten der Formel I1

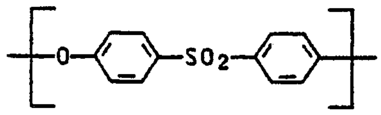

(I1)

enthält.

4. Hochtemperaturbeständige thermoplastische Formmassen nach Anspruch 1 oder 2, dadurch gekennzeichnet, daß die Komponente A 50 - 100 mol-% an wiederkehrenden Einheiten der allgemeinen Formel

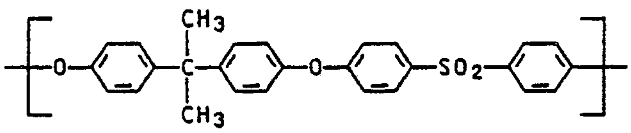

(I2)

enthält.

5. Hochtemperaturbeständige thermoplastische Formmassen nach Anspruch 1 oder 2, dadurch gekennzeichnet, daß die Komponente A 50 - 100 mol-% an wiederkehrenden Einheiten der allgemeinen Formel

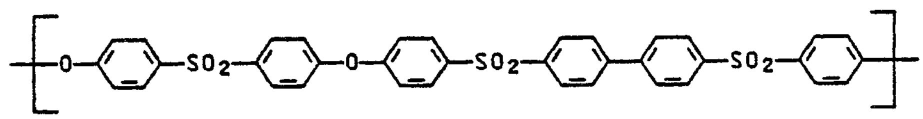

(II5)

enthält.

6. Verwendung der hochtemperaturbeständigen thermoplastischen Formmassen gemäß den Ansprüchen 1 bis 5 zur Herstellung von Formkörpern.

7. Formkörper, enthaltend als wesentliche Komponente hochtemperaturbeständige thermoplastische Formmassen gemäß den Ansprüchen 1 bis 5.